# EUROPÄISCHE PATENTSCHRIFT

(11) **EP 3 701 648 B1**
(45) Veröffentlichungstag und Bekanntmachung des Hinweises auf die Patenterteilung: **23.02.2022**
(21) Anmeldenummer: 18795407.8
(22) Anmeldetag: 23.10.2018
(51) Int. Cl.: H04J 3/06, H04J 3/14

(54) **VERFAHREN ZUM ERKENNEN EINES FEHLERHAFTEN ZEITSTEMPELS EINER ETHERNET-NACHRICHT UND STEUEREINHEIT FÜR EIN KRAFTFAHRZEUG**
METHOD FOR IDENTIFYING AN INCORRECT TIME STAMP OF AN ETHERNET MESSAGE AND CONTROL UNIT FOR A MOTOR VEHICLE
PROCÉDÉ DE DÉTECTION D'UN HORODATAGE DÉFECTUEUX D'UN MESSAGE ETHERNET ET UNITÉ DE COMMANDE D'UN VÉHICULE AUTOMOBILE

(30) Priorität: 26.10.2017 DE 102017219209
(43) Veröffentlichungstag der Anmeldung: 02.09.2020
(73) Patentinhaber: Continental Automotive GmbH, 30165 Hannover (DE)
(72) Erfinder: ZINNER, Helge, 81737 München (DE)
(74) Vertreter: Continental Corporation
(86) Internationale Anmeldenummer: PCT/EP2018/078961
(87) Internationale Veröffentlichungsnummer: WO 2019/081463

(56) Entgegenhaltungen:
- DE-A1-102015 213 845
- US-A1- 2013 094 372
- ANDREAS KERN ET AL: "Accuracy of Ethernet AVB time synchronization under varying temperature conditions for automotive networks", DESIGN AUTOMATION CONFERENCE (DAC), 2011 48TH ACM/EDAC/IEEE, IEEE, 5. Juni 2011 (2011-06-05), Seiten 597-602, XP031927788, ISBN: 978-1-4503-0636-2
- RADU ONICA ET AL: "Fault-Tolerant Precision Time Protocol for Smart Grids", SIMPÓSIO DE INFORMÁTICA (INFORUM), 8. September 2015 (2015-09-08), XP055538050, Covilhã, Portugal

## Beschreibung

Die Erfindung betrifft ein Verfahren zum Erkennen eines fehlerhaften Zeitstempels einer Ethernet-Nachricht. Es wird eine Ethernet-Nachricht mit einem Zeitstempel durch eine Steuereinheit empfangen. Weiterhin betrifft die Erfindung eine Steuereinheit für ein Kraftfahrzeug. Die Steuereinheit ist dazu ausgebildet, eine Ethernet-Nachricht mit einem Zeitstempel zu empfangen.

Ethernet-Technologien für Bordnetze von Kraftfahrzeugen sind bekannt. Als Protokolle finden insbesondere die Standards Ethernet AVB (Audio Video Bridging) als auch sein Nachfolger Ethernet TSN (Time-Sensitive Networking) Beachtung. Ethernet AVB wird bereits heute in Serienentwicklung eingesetzt. Ein Substandard von Ethernet AVB ist derzeit der Synchronisierungsstandard IEEE 802.1AS, welcher vom Standard IEEE 1588 abgeleitet ist. Beide Standards nutzen das Precision Time Protocol (PTP) um ein gemeinsames Zeitmaß in einem Ethernet-Netzwerk zu schaffen.

PTP definiert dabei drei Mechanismen. Messung der Leitungsverzögerung zwischen Nachbarknoten, Bestimmung der besten Uhr und der Austausch von Zeitinformationen. Der Peer-Delay-Mechanismus hat die Aufgabe, die Verzögerung zwischen zwei verbundenen Ports zu vermessen. Die gemessene Laufzeit wird benutzt, um die Zeitinformation der Knoten zu korrigieren und diese Zeit miteinzurechnen. Delay_Request-Nachrichten werden zyklisch von beiden Kommunikationspartnern unabhängig voneinander verwendet. Ist der jeweilige Knoten IEEE 802.1AS fähig, so wird dieser mit einer Delay_Response- und einer Pdelay_Resp_Follow_Up-Nachricht antworten. Diese Nachrichten werden beim Eingang mit einem Hardware-Zeitstempel versehen und an die PTP-Anwendung weitergeleitet. Dadurch lässt sich die Latenz und die zeitliche Differenz zu benachbarten Port bestimmen.

Bekannt sind insbesondere drei Mechanismen von PTP. Ein Port, der Initiator, startet die Messung, indem er eine Delay_Request-Nachricht an den mit ihm verbunden Port, den Responder sendet und einen Ausgangszeitstempel generiert. Dieser Ausgangszeitstempel bezeichnet einen Hardwarezeitstempel, der so spät wie möglich beim Verlassen des Ethernet Transceivers geschrieben wird. Der Responder generiert beim Eintreffen dieses Pakets einen Empfangszeitstempel. Als Antwort sendet der Responder eine Delay_Response_Nachricht. In dieser Nachricht überträgt er den Empfangszeitstempel der Delay_Request-Nachricht. Verlässt diese Nachricht den Responder, so erzeugt dieser wiederum einen Zeitstempel, welcher in einer unmittelbar darauffolgenden Delay_Response-Follow-Up-Nachricht versendet wird. Beim Empfangen der Delay_Reponse-Nachricht durch den Initiator, generiert dieser wiederum einen weiteren Empfangszeitstempel. Der Initiator kann aus den vier Zeitstempeln die durchschnittliche Laufzeit der zurückgelegten Strecke errechnen.

PTP definiert eine Master-Slave-Uhrenhierarchie mit einer besten Uhr innerhalb eines AVB-Netzwerks. Von dieser Uhr, dem Grandmaster, leitet sich die Zeitbasis der in diesem Netzwerk befindlichen Knoten ab. Der Best Master Clock Algorithm (BMCA) dient zur Bestimmung dieses Uhrentyps und der Bekanntmachung dieser Informationen im Netzwerk. IEEE 802.1AS-fähige Systeme senden zyklisch Bekanntmachungsnachrichten zu ihren Nachbarknoten mit Informationen zur besten Uhr der AVB-Wolke. Der Empfänger einer solchen Nachricht vergleicht diese Informationen mit den Merkmalen seiner Uhr und den eventuell bereits von einem anderen Port empfangenen Nachrichten. Auf Basis dieser Nachrichten wird ein Zeitsynchronisationsbaum aufgestellt. Jedem Port wird in diesem Zuge einer von vier Portzuständen zugewiesen. Den Zustand "Master Port" bekommt der Port, der einen kürzeren Weg zum Grandmaster hat als sein Verbindungspartner. Der Zustand "Slave Port" wird dann zugeordnet, wenn an diesem Knoten noch kein anderer Port diesen Zustand besitzt. Den Zustand "disabled" wählt derjenige Port, welcher das PTP-Protokoll nicht vollständig unterstützen kann. Der Zustand "passiv" wird gewählt, wenn keiner der anderen drei Zustände zutrifft.

Der Austausch der Zeitinformationen wird schließlich durch den Sync_Follow_Up-Mechanismus durchgeführt. Die Masterports senden zyklisch Sync- und Follow_Up-Nachrichten an den benachbarten Verbindungspartner. Wenn die Sync-Nachricht den Masterport verlässt, wird ein Zeitstempel generiert, welcher unmittelbar in einer darauffolgenden Follow_Up-Nachricht übertragen wird. Dieser Zeitstempel entspricht der aktuellen Uhrzeit des Grandmasters zum Sendezeitpunkt der Sync_Nachricht. Die vom Grandmaster ausgehenden Nachrichten werden nicht weitergeleitet, sondern in jedem Knoten, auch den Switchen (Netzwerkweichen), neu erstellt.

Durch das Ethernet-Netzwerk können Steuergeräte eines Kraftfahrzeugs einfach miteinander vernetzt werden. So können zum Beispiel mehrere Kameras miteinander vernetzt werden. Die Sensordaten der Kameras können dann beispielsweise auch fusioniert werden. Beim Einsatz von Ethernet TSN (und dem PTP Protokoll) können die jeweiligen Steuergeräte jeweils unabhängig voneinander Zusatzinformationen mit jedem direkt verbundenen Nachbarn austauschen. Im Kraftfahrzeug sind üblicherweise statische und fest verdrahtete Verbindungen zwischen Steuergeräten zu finden, das heißt Steuergeräte haben üblicherweise immer die gleichen Nachbarn und werden nicht mit neuen Nachbarn verbunden.

Das Zeitsynchronisationsprotokoll IEEE 1588 und dessen Derivat IEEE 802.1AS (und zukünftig IEEE 802.1AS-Rev) mit dem eigenen Protokoll PTP oder gPTP (generalized precision time protocol) haben Einzug in Fahrzeuge erhalten. Dabei sorgt das Protokoll für einen Austausch von Zeitinformationen, liefert aber keine Informationen über die Integrität der Synchronisationsinformationen (Ist die beste Uhr auch die beste Uhr oder kann ich der Uhr vertrauen oder stimmt die Zeit?). Die Ausführung von zeitausgelösten Aktionen kann zwar veranlasst werden, die Güte der Genauigkeit aber nicht zugesichert werden. Bei Ethernet gibt es nur einen einzigen Sender der Synchronisationsnachrichten. Die Uhrzeit kann durch Fehler, Temperatur oder auch Angriffe verfälscht worden sein.

Aus US 2013/094372 A1 ist ein Verfahren zum Bereitstellen von modifizierenden Sensorzeitstempeldaten bekannt. Das Verfahren kann das Empfangen von Paketdaten von einem oder mehreren Sensoren oder intelligenten elektronischen Geräten (lEDs) umfassen; Untersuchen von Zeitstempeln, die den empfangenen Paketdaten zugeordnet sind; und Bestimmen einer Varianz zwischen den Zeitstempeln oder eines Offsets zwischen den Zeitstempeln und einer genauen Zeitquelle.

Auch wurden in Andreas Kern et al, "Accuracy of Ethernet AVB Time Synchronization Under Varying Temperature Conditions for Automotive Networks", XP031927788A, in Radu Onica et al., "Fault-Tolerant Precision Time Protocol for Smart Grids", Simposio De Informatica (Inforum), XP055538050, Covilha, Portugal, und in DE 102015213845 A1 verschiedene Konzepte bezüglich Zeitstempeln offenbart.

Insbesondere im Hinblick auf das automatisierte Fahren werden zeitgesteuerte Aktionen für zum Beispiel Synchronisation von Sensoren wie bspw. Kamera, Lidar, Radar und deren Datenströme immer wichtiger. Gerade hier ist eine Plausibilisierung wünschenswert und notwendig. Insbesondere ist die Kenntnis darüber interessant, ob eine Operation vom Kraftfahrzeug autonom übernommen werden kann oder aber der Fahrer das Steuer besser noch weiterhin selbst übernehmen sollte.

Bisher ist noch keine zuverlässige Lösung bekannt, einen Zeitstempel einer Ethernet-Nachricht auf Gültigkeit zu validieren. Der Zeitstempel kann beispielsweise bewusst gefälscht sein, insbesondere durch einen Angriff. Der Zeitstempel kann auch ungültig sein, da noch keine Synchronisation vorliegt. Der Zeitstempel kann aber auch durch einen Bitdreher fehlerhaft sein.

Es stellt sich also die Frage, wie sich eine Fusionseinheit für Sensordaten verhalten soll, wenn sie zwei Pakete fusionieren soll, die Zeitstempel aber nicht zusammenpassen, das heißt zeitlich zu weit auseinander liegen, oder aber ein notwendiges Paket nicht vorhanden ist. Dies bedeutet nicht unbedingt, dass die Daten alt und unbrauchbar sind, sondern vielleicht dass ein Fehler im Zeitstempel vorliegt. Alternativ kann der Empfänger dem Sender der Informationen bzw. dessen Software nicht vertrauen, z.B. wegen ein bekanntlich nichtvertrauenswürdiger Pfad. Also der Zeitstempel kann richtig sein aber trotzdem hat der Empfänger kein Vertrauen (evtl. findet gerade eine Zeit-Änderung wegen Synchronisierung statt, oder ein Update der Zeitsynchronisationssoftware schlug fehl, oder es sind plötzlich Fehler im Zeitprotokoll bekannt geworden, ...)Außerdem ist zu erwähnen, dass eigentlich alle Pakete wichtig sind und im Normalfall auf keines verzichtet werden kann, zum Beispiel gibt es bei einem Fahrerassistenzsystem üblicherweise nicht die Zeit, bzw. nicht die Möglichkeit, verlorene Pakete neu anzufordern.

Es ist Aufgabe der vorliegenden Erfindung, ein Verfahren und eine Steuereinheit zu schaffen, bei welchem bzw. mit welcher ein fehlerhafter Zeitstempel einer Ethernet-Nachricht zuverlässiger erkannt und weiterverarbeitet werden kann. Diese Aufgabe wird durch ein Verfahren und eine Steuereinheit gemäß den unabhängigen Ansprüchen gelöst.

Bei einem erfindungsgemäßen Verfahren wird ein fehlerhafter Zeitstempel einer Ethernet-Nachricht erkannt. Es werden unter anderem folgende Schritte durchgeführt:
- Empfangen einer Ethernet-Nachricht mit einem Zeitstempel durch eine Steuereinheit, insbesondere eines Kraftfahrzeugs;
- Bestimmen einer Zeitdifferenz zwischen einer globalen Zeit des Zeitstempels und einer lokalen Zeit einer Uhr der Steuereinheit, insbesondere durch die Steuereinheit; und
- Erkennen des Zeitstempels der Ethernet-Nachricht als fehlerhaft, insbesondere durch die Steuereinheit, falls die Zeitdifferenz größer als ein Zeitdifferenzgrenzwert ist, wobei die globale Zeit eines Zeitstempels zumindest einer der Ethernet-Nachricht nachfolgenden weiteren Ethernet-Nachricht durch die lokale Zeit der Uhr der Steuereinheit ersetzt wird, falls der Zeitstempel der Ethernet-Nachricht fehlerhaft ist.

Der Erfindung liegt die Erkenntnis zugrunde, dass die Steuereinheit eine, insbesondere in die Steuereinheit integrierte, Uhr aufweist und die Uhr eine lokale Zeit bereitstellt, welche zur Erkennung und/der zur Ersetzung des fehlerhaften Zeitstempels genutzt werden kann. Dadurch kann der fehlerhafte Zeitstempel zuverlässig erkannt und das Paket weiterverarbeitet werden.

Die Ethernet-Nachricht kann beispielsweise als Synchronisationsnachricht oder als Sensordatennachricht vorliegen. Sowohl die Zeitsynchronisationsnachricht als auch die Sensordatennachricht weist Zeitinformationen wie z.B. einen Zeitstempel auf. Der Zeitstempel kann beispielsweise fehlerhaft sein, da der Zeitstempel bewusst gefälscht sein kann oder aber noch keine Synchronisation zwischen einer Sendesteuereinheit und der Steuereinheit vorliegt oder aber es kann ein Bitdreher vorliegen.

Vorgesehen ist es also die globale Zeit des Zeitstempels zu validieren bzw. zu überprüfen, um eine Entscheidung zur Weiterverarbeitung der Ethernet-Nachricht bestimmen zu können.

Die globale Zeit des Zeitstempels Kann durch die lokale Zeit der Uhr der Steuereinheit ersetzt werden, falls der Zeitstempel fehlerhaft bzw. unglaubwürdig ist. Durch das Ersetzen der globalen Zeit durch die lokale Zeit kann die Ethernet-Nachricht immerhin mit einer Annäherung an die globale Zeit, welche im Ethernet vorliegt, bereitgestellt werden. Vorteilhaft ist dies, da die Ethernet-Nachricht, beispielsweise ausgebildet als eine Sensordatennachricht, weiter genutzt werden kann und nicht wie im Fall einer von der globalen Zeit stark abweichenden fehlerhaften Zeit fehlerhaft weiterverarbeitet wird oder aber unverarbeitet verworfen wird. Dieses kann besonders vorteilhaft sein, wenn Echtzeittaufnahmen wie Radar, Kamera und Lidar nicht im Sensor zwischengespeichert werden, und deshalb sonst nicht mehr zur Verfügung stehen wurden.

Weiterhin ist es vorzugsweise vorgesehen, dass die Ethernet-Nachricht mit dem Zeitstempel mit der lokalen Zeit in der Steuereinheit weiterverarbeitet wird und/oder an eine weitere Steuereinheit, insbesondere des Kraftfahrzeugs, weitergeleitet wird. Vorzugsweise wird die Ethernet-Nachricht mit der lokalen Zeit also innerhalb der Steuereinheit weiterverarbeitet und/oder an die weitere Steuereinheit weitergeleitet. Das Weiterverarbeiten oder das Weiterleiten geschieht vorzugsweise alternativ zum Verwerfen der Ethernet-Nachricht.

Dadurch, dass die Ethernet-Nachrichten die lokale Zeit anstatt des fehlerhaften Zeitstempels aufweisen, kann die Ethernet-Nachricht mit der lokalen Zeit wie eine Ethernet-Nachricht mit einem fehlerfreien Zeitstempel, weiterverarbeitet und/oder weitergeleitet werden. Die Zeit bzw. Zeitstempel wird dann bsp. ausgetauscht oder es wird vermerkt das diese nicht benutzt wird. Dabei kann entweder in den Frame beim Eingang eine neue Zeit eingeschrieben werden oder zu dieser Nachricht im System eine Zeit generiert und zusammen mit dem Frame zur Anwendung oder Software weitergeleitet werden.

Weiterhin ist es vorgesehen, dass eine globale Zeit eines Zeitstempels zumindest einer der Ethernet-Nachricht nachfolgenden weiteren Ethernet-Nachricht durch die lokale Zeit der Uhr der Steuereinheit ersetzt wird, falls der Zeitstempel der Ethernet-Nachricht fehlerhaft ist. Insbesondere können alle verwandten Daten für die gleiche Anwendung mit der lokalen Zeit weiterverarbeitet werden. Wenn mehrere Daten(ströme) mit Zeitstempeln fusioniert werden und eine Strom davon Fehler beim Zeitstempel aufweist, dann kann vorgesehen sein, dass nach der Erkennung für alle Datenströme (die zu einer Anwendung fusioniert werden) der globale Zeitstempel entfernt und der lokale eingesetzt wird. Anwendungen können sein: Fusionseinheit, Datenlogger, paralleles Ausführen auf mehreren Steuergeräten, usw.

Es kann weiterhin vorteilhaft sein, wenn alle Daten oder alle verwandten Daten dauerhaft oder für eine bestimmte Zeit mit der lokalen Zeit weiterverarbeitet werden. Die Weiterverarbeitung mit der lokalen Zeit kann so lange weitergeführt werden bis die Ursache der fehlerhaften Zeitangabe gefunden wird, oder für eine bestimmte Zeitdauer, oder bis zum Zeitpunkt, wenn kein Fehler mehr auftritt.

Die weitere Ethernet-Nachricht wird ebenfalls von der Steuereinheit empfangen. Die weitere Ethernet-Nachricht wird allerdings zeitlich nach der Ethernet-Nachricht empfangen. Vorzugsweise ist es also nun vorgesehen, dass wenn bei der Ethernet-Nachricht der fehlerhafte Zeitstempel erkannt wurde, dass davon ausgegangen wird, dass die weitere Ethernet-Nachricht ebenfalls einen fehlerhaften Zeitstempel aufweist. Es kann dann auf das Extrahieren des Zeitstempels der weiteren Ethernet-Nachricht und das Bestimmen einer Zeitdifferenz zwischen der globalen Zeit der weiteren Ethernet-Nachricht und der lokalen Zeit der Steuereinheit verzichtet werden, indem die globale Zeit der weiteren Ethernet-Nachricht einfach vorsorglich durch die lokale Zeit ersetzt wird. Vorteilhaft ist dies, da die Steuereinheit dadurch aufwandsärmer bzw. mit weniger Berechnungsaufwand betrieben werden kann.

Weiterhin kann es vorgesehen sein, dass die Ethernet-Nachricht unverarbeitet verworfen wird, falls der Zeitstempel fehlerhaft ist. Es kann also auch sein, dass die Ethernet-Nachricht nach dem Erkennen des fehlerhaften Zeitstempels verworfen wird, um ein fehlerhaftes Weiterverarbeiten der Ethernet-Nachricht, beispielsweise durch die Steuereinheit oder einer weiteren Steuereinheit zu verhindern.

Weiterhin ist es vorzugsweise vorgesehen, dass ein Temperaturwert einer die Ethernet-Nachricht sendenden Sendesteuereinheit, insbesondere des Kraftfahrzeugs, bestimmt wird und der Zeitstempel als fehlerhaft erkannt wird, falls der Temperaturwert größer als ein Temperaturgrenzwert ist. Durch den Vergleich des Temperaturwerts mit dem Temperaturgrenzwert kann festgestellt werden, ob die Sendesteuereinheit überhitzt ist und somit von einem Fehler der Sendesteuereinheit beim Erzeugen des Zeitstempels ausgegangen werden kann, oder ein erhöhtes Risiko eines Fehlers kann vorhergesehen werden. Die Sendesteuereinheit kann beispielsweise eine vielfältige Steuereinheit des Kraftfahrzeugs sein, welche die Ethernet-Nachricht in der Sendekette vor dem Empfang durch die Steuereinheit zumindest einmal gesendet hat. Es wird davon ausgegangen, dass falls der Temperaturwert größer als der Temperaturgrenzwert ist, eine in der Sendesteuereinheit stattfindende Berechnung fehlerbehaftet sein kann. Durch den Temperaturwert kann der Zeitstempel zuverlässiger und genauer als fehlerhaft erkannt werden.

Es kann auch sein, dass ein Temperaturwert einer die Ethernet-Nachricht sendenden Sendesteuereinheit, insbesondere des Kraftfahrzeugs, bestimmt wird und der Zeitstempel als fehlerhaft erkannt wird, falls der Temperaturwert kleiner als ein weiterer Temperaturgrenzwert ist. Der weitere Temperaturgrenzwert ist dann quasi ein Mindesttemperaturwert, durch welchen von einem Fehler des Zeitstempels ausgegangen wird, falls die Sendesteuereinheit zu kalt beim Senden oder Erzeugen des Zeitstempels ist und der Zeitstempel deshalb fehlerhaft erzeugt wird.

Weiterhin ist es vorzugsweise vorgesehen, dass mehrere Ethernet-Nachrichten empfangen werden und eine Empfangsfrequenz der Ethernet-Nachrichten bestimmt wird, wobei die Zeitdifferenz nur bestimmt wird, falls die Empfangsfrequenz weniger als ein Frequenztoleranzwert von einem Empfangsfrequenzsollwert abweicht. So wird insbesondere die Synchronisationsnachricht in regelmäßigen Abständen von der Steuereinheit empfangen. Ist die Abweichung und somit die Empfangsfrequenz bei einer Ethernet-Nachricht größer als der Frequenztoleranzwert, also wird die Ethernet-Nachricht nach zu kurzer Zeit nach dem Empfangen der vorhergehenden Ethernet-Nachricht empfangen oder aber wird die Ethernet-Nachricht nach zu langer Zeit nach Empfangen der vorhergehenden Ethernet-Nachricht empfangen, so ist dies ein Indiz für einen Fehler und die Ethernet-Nachricht bzw. der Zeitstempel der Ethernet-Nachricht wird als fehlerhaft erkannt. Falls die Empfangsfrequenz größer als der Frequenztoleranzwert ist, wird schon deswegen von einem Fehler bzw. einem fehlerhaften Zeitstempel ausgegangen und die Zeitdifferenz muss deshalb gar nicht mehr bestimmt werden.

Weiterhin ist es vorzugsweise vorgesehen, dass überprüft wird, ob eine die Ethernet-Nachricht sendende Sendesteuereinheit, insbesondere des Kraftfahrzeugs, zum, insbesondere direkten, Senden der Ethernet-Nachricht an die Steuereinheit autorisiert ist, und die Zeitdifferenz nur bestimmt wird, falls die Sendesteuereinheit autorisiert ist. Beim Autorisieren wird insbesondere bestimmt, ob die Sendesteuereinheit dazu berechtigt ist, die Ethernet-Nachricht an die Steuereinheit zu senden. Falls die Sendesteuereinheit also nicht autorisiert ist, wird automatisch von einem Fehler ausgegangen und die Zeitdifferenz und somit die Fehlerbestimmung anhand der lokalen Uhr ist deshalb gar nicht mehr nötig. Somit kann der Aufwand zum Bestimmen der Zeitdifferenz bzw. zum Erkennen des fehlerhaften Zeitstempels anhand der lokalen Zeit vermieden werden. Weiterhin kann der fehlerhafte Zeitstempel zuverlässiger erkannt werden.

Weiterhin ist es vorzugsweise vorgesehen, dass eine Nachrichtenart der Ethernet-Nachricht bestimmt wird, und die Empfangsfrequenz nur bestimmt wird und/oder die Ethernet-Nachricht nur bezüglich der Autorisierung überprüft wird, falls die Ethernet-Nachricht als Synchronisationsnachricht ausgebildet ist. Die Nachrichtenart beschreibt insbesondere, ob die Ethernet-Nachricht als Synchronisationsnachricht oder aber als Sensordatennachricht vorliegt. Durch das Bestimmen der Nachrichtenart kann das Überprüfen der Empfangsfrequenz und/oder der Autorisierung eingespart bzw. ausgelassen werden, falls die Ethernet-Nachricht beispielsweise als Sensordatennachricht vorlieget. So ist die Regelmäßigkeit des Empfangs der Sensordatennachricht nicht in dem Maße gegeben, in welchem die Synchronisationsnachricht regelmäßig gesendet und empfangen wird.

Die Erfindung betrifft auch eine Steuereinheit für ein Kraftfahrzeug. Die Steuereinheit ist dazu eingerichtet, eine Ethernet-Nachricht mit einem Zeitstempel zu empfangen. Weiterhin ist die Steuereinheit dazu ausgebildet, eine Zeitdifferenz zwischen einer globalen Zeit des Zeitstempels und einer lokalen Zeit einer Uhr der Steuereinheit zu bestimmen. Die Steuereinheit ist auch dazu ausgebildet, den Zeitstempel der Ethernet-Nachricht als fehlerhaft zu erkennen, falls die Zeitdifferenz größer als ein Zeitdifferenzgrenzwert ist, wobei die globale Zeit eines Zeitstempels zumindest einer der Ethernet-Nachricht nachfolgenden weiteren Ethernet-Nachricht durch die lokale Zeit der Uhr der Steuereinheit ersetzt wird, falls der Zeitstempel der Ethernet-Nachricht fehlerhaft ist.

Die Steuereinheit ist dabei insbesondere als Steuergerät zum Erzeugen und/oder Ausgeben eines Steuersignals ausgebildet oder aber auch als Switch bzw. Netzwerkweiche oder als Fusionseinheit oder als Sensoreinheit. So ist die Steuereinheit insbesondere als Ethernet-Kommunikationseinheit im Ethernet des Kraftfahrzeugs ausgebildet, welche eine Ethernet-Nachricht senden und/oder empfangen kann.

Des Weiteren betrifft die Erfindung auch ein Kraftfahrzeug mit einer erfindungsgemäßen Steuereinheit oder einer vorteilhaften Ausgestaltung davon. Vorteilhafte Ausführungen des erfindungsgemäßen Verfahrens sind als vorteilhafte Ausführungen der Steuereinheit und des Kraftfahrzeugs anzusehen. Die gegenständlichen Komponenten der Steuereinheit und des Kraftfahrzeugs sind jeweils dazu ausgebildet, die jeweiligen Verfahrensschritte durchzuführen.

Weitere Merkmale der Erfindung ergeben sich aus den Ansprüchen, den Figuren und der Figurenbeschreibung.

Ausführungsbeispiele der Erfindung werden nachfolgend anhand schematischer Zeichnungen näher erläutert.

Es zeigen:
Fig. 1 eine schematische Draufsicht auf ein Ausführungsbeispiel eines Kraftfahrzeugs mit einem Ausführungsbeispiel einer erfindungsgemäßen Steuereinheit;
Fig. 2 ein Ablaufdiagramm eines Ausführungsbeispiels eines erfindungsgemäßen Verfahrens;
Fig. 3 ein weiteres Ablaufdiagramm eines Ausführungsbeispiels des Verfahrens, bei welchem eine Nachrichtenart einer Ethernet-Nachricht bestimmt wird;
Fig. 4 ein weiteres Ablaufdiagramm eines Ausführungsbeispiels des Verfahrens; und
Fig. 5 ein weiteres Ablaufdiagramm eines Ausführungsbeispiels des Verfahrens. In den Figuren werden gleiche oder funktionsgleiche Elemente mit den gleichen Bezugszeichen versehen.

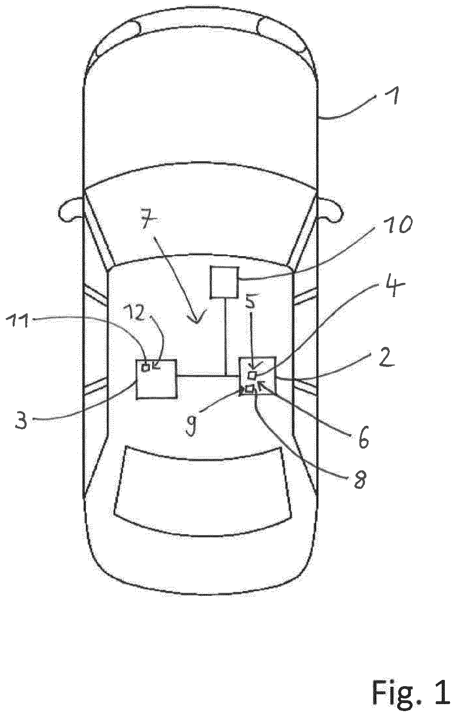

Fig. 1 zeigt ein Kraftfahrzeug 1 in Draufsichtdarstellung mit einer Steuereinheit 2. Weiterhin weist das Kraftfahrzeug 1 eine Sendesteuereinheit 3 auf. Die Sendesteuereinheit 3 ist mit der Steuereinheit 2 datenübertragend verbunden. Sowohl die Steuereinheit 2 als auch die Sendesteuereinheit 3 können als Steuergerät ausgebildet sein oder aber als Kommunikationseinheit bzw. Ethernet-Kommunikationseinheit oder als Netzwerkweiche bzw. Switch.

Die Steuereinheit 2 empfängt eine Ethernet-Nachricht 4. Die Ethernet-Nachricht 4 weist einen Zeitstempel 5 auf. Der Zeitstempel 5 wiederum weist beim Empfang eine globale Zeit 6 auf. Die globale Zeit 6 wird gemäß dem Ausführungsbeispiel durch eine beste Uhr innerhalb eines Ethernets 7 des Kraftfahrzeugs 1 bzw. durch einen Grandmaster des Ethernets 7 bereitgestellt. Das Ethernet 7 ist gemäß dem Ausführungsbeispiel als Bordkommunikationsnetz des Kraftfahrzeugs 1 zur Datenübertragung ausgebildet.

Die Steuereinheit 2 weist eine Uhr 8 auf. Die Uhr 8 ist gemäß dem Ausführungsbeispiel in die Steuereinheit 2 integriert. Durch die Uhr 8 wird eine lokale Zeit 9 bereitgestellt. Die Uhr 8 kann beispielsweise als Quarztaktgeber ausgebildet sein.

Gemäß dem Ausführungsbeispiel bestimmt die Steuereinheit 2 eine Zeitdifferenz zwischen der globalen Zeit 6 und der lokalen Zeit 9.

Die Zeitdifferenz wird dann gemäß dem Ausführungsbeispiel durch die Steuereinheit 2 mit einem Zeitdifferenzgrenzwert verglichen. Für den Fall, dass die Zeitdifferenz größer als der Zeitdifferenzgrenzwert ist, wird der Zeitstempel 5 als fehlerhaft erkannt. Das bedeutet, dass der Zeitstempel 5 beispielsweise absichtlich manipuliert wurde oder aber ein Fehler bei der Erzeugung des Zeitstempels 5 erfolgte oder aber ein Fehler bei der Übertragung des Zeitstempels 5 erfolgte oder aber, dass der Zeitstempel 5 ungültig ist, da die Steuereinheit 2 und/oder die Sendesteuereinheit 3 noch nicht synchron im Ethernet 7 vorliegt.

Gemäß dem Ausführungsbeispiel ist es nun vorgesehen, dass die globale Zeit 6 durch die lokale Zeit 9 ersetzt wird, falls der Zeitstempel 5 fehlerhaft ist bzw. als fehlerhaft erkannt wird.

Die Ethernet-Nachricht 4 mit der lokalen Zeit 9 wird dann gemäß dem Ausführungsbeispiel an eine weitere Steuereinheit 10 des Kraftfahrzeugs 1 weitergeleitet. Ergänzend oder alternativ kann die Ethernet-Nachricht 4 mit der lokalen Zeit 9 auch in der Steuereinheit 2 selbst weiterverarbeitet werden.

Die Sendesteuereinheit 3 weist gemäß dem Ausführungsbeispiel einen Temperatursensor 11 auf. Mit dem Temperatursensor 11 wird ein Temperaturwert 12 der Sendesteuereinheit 3 bestimmt. Ergänzend oder alternativ kann auch die Steuereinheit 2 und/oder die weitere Steuereinheit 10 einen Temperatursensor zum Bestimmen eines jeweiligen Temperaturwerts aufweisen.

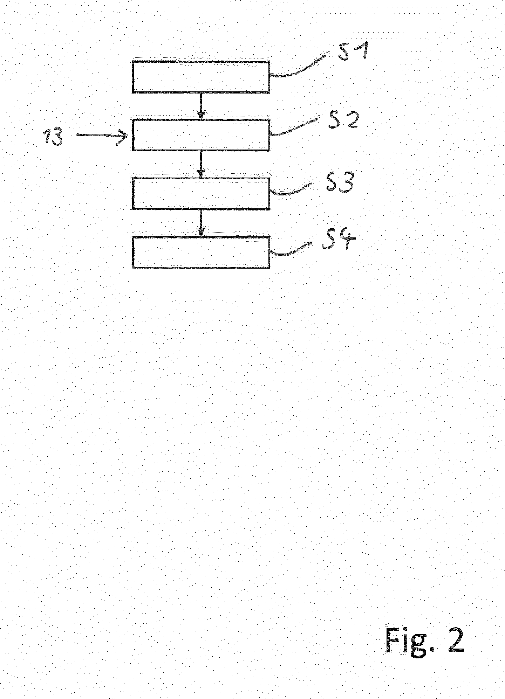

Fig. 2 zeigt ein Ablaufdiagramm zum allgemeinen Ablauf eines Ausführungsbeispiels des Verfahrens. In einem Schritt S1 in einem Schritt S2 wird die Ethernet-Nachricht 4 geprüft, das heißt es wird überprüft, ob die Sendesteuereinheit 3 zum Senden der Ethernet-Nachricht 4 autorisiert ist. Weiterhin wird in Schritt S2 geprüft, ob eine Empfangsfrequenz 13 weniger als ein Frequenztoleranzwert von einem Empfangsfrequenzsollwert abweicht.

In einem Schritt S3 wird die Zeitdifferenz bestimmt und der Zeitstempel 5 wird als fehlerhaft erkannt, falls die Zeitdifferenz größer als der Zeitdifferenzgrenzwert ist. In einem Schritt S4 wird die globale Zeit 6 im Zeitstempel 5 schließlich durch die lokale Zeit 9 ersetzt, falls der Zeitstempel 5 fehlerhaft ist.

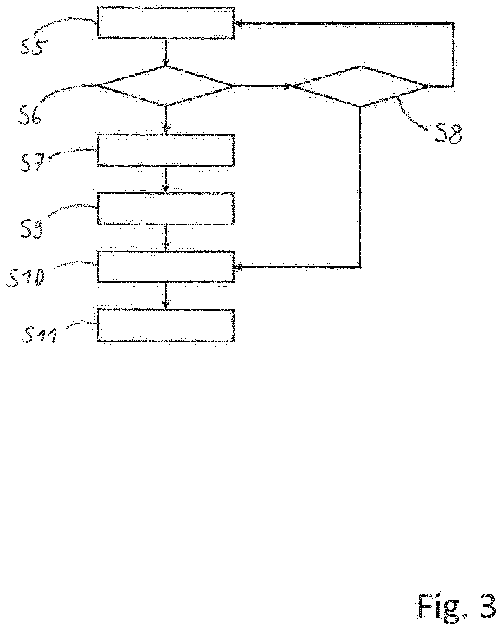

Fig. 3 zeigt ein Ablaufdiagramm zur Einstufung von Nachrichten mit Synchronisationshintergrund. In einem Schritt S5 wird die Ethernet-Nachricht 4 durch die Steuereinheit 2 empfangen. In einem Schritt S6 wird entschieden, ob es sich bei der Ethernet-Nachricht 4 um eine Synchronisationsnachricht handelt. Ist dies der Fall und handelt es sich um eine Synchronisationsnachricht, so folgt ein Schritt S7. Ist dies nicht der Fall und die Ethernet-Nachricht 4 ist keine Synchronisationsnachricht sondern beispielsweise eine Sensordatennachricht, so folgt ein Schritt S8. Im Schritt S7 wird überprüft, ob die Sendesteuereinheit 3 autorisiert ist die Ethernet-Nachricht 4 zur Steuereinheit 2 zu schicken. Ist dies der Fall und die Sendesteuereinheit 3 ist dazu autorisiert, so folgt ein Schritt S9. Im Schritt S9 wird die Empfangsfrequenz 13 bestimmt und geprüft, ob die Empfangsfrequenz 13 kleiner als der Frequenztoleranzwert ist und somit innerhalb eines Frequenztoleranzwertbereichs liegt.

Nach dem Schritt S9 folgt ein Schritt S10. Im Schritt S10 wird der Zeitstempel 5 aus der Ethernet-Nachricht 4 extrahiert. Es folgt ein Schritt S11, in welchem die Zeitdifferenz bestimmt wird und der Zeitstempel 5 auf einen Fehler überprüft wird, das heißt als fehlerhaft erkannt wird oder aber als fehlerfrei eingestuft wird.

In Schritt S8 wird entschieden, ob es sich bei der Ethernet-Nachricht 4 um eine Nachricht mit Zeitstempel, also um beispielsweise eine Sensordatennachricht mit Zeitstempel handelt oder nicht. Weist die Ethernet-Nachricht 4 also den Zeitstempel 5 auf, so folgt der Schritt S10. Weist die Ethernet-Nachricht 4 keinen Zeitstempel 5 auf, so folgt der Schritt S5.

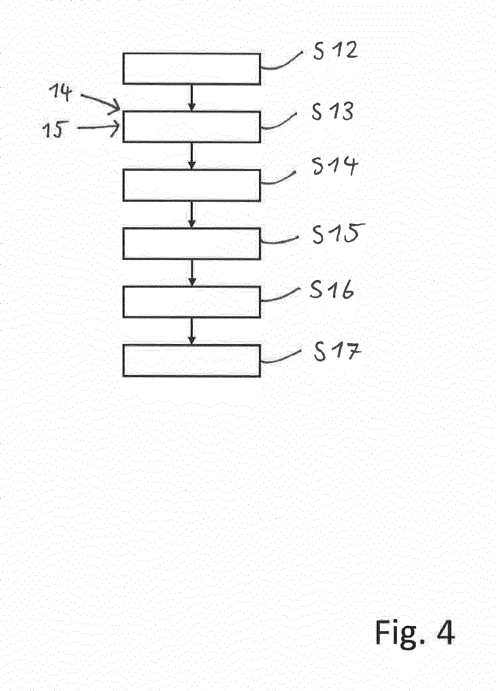

Fig. 4 zeigt ein Ablaufdiagramm zur Validierung des empfangenen Zeitstempels 5. In einem Schritt S12 wird der Zeitstempel 5 mit der lokalen Zeit 9 aufgenommen, wenn die Ethernet-Nachricht 4 empfangen wird. In einem Schritt S13 wird ein Zeitstempel 14 einer weiteren Ethernet-Nachricht 15 mit der lokalen Zeit 9 aufgenommen, wenn die weitere Ethernet-Nachricht 15 durch die Steuereinheit 2 empfangen wird.

In einem Schritt S14 wird die Differenz zwischen der lokalen Zeit 9 im Zeitstempel 5 der Ethernet-Nachricht 4 und der lokalen Zeit 9 im Zeitstempel 14 der weiteren Ethernet-Nachricht 15 berechnet bzw. bestimmt. In einem Schritt S15 wird eine Ungenauigkeit der Uhr 8 bestimmt, in dem die lokale Zeit 9 des Zeitstempels 5 der Ethernet-Nachricht 4 zur Differenz aus dem Schritt S14 addiert wird. In einem Schritt S16 wird eine Schätzung für die lokale Zeit 9 des Zeitstempels 14 der weiteren Ethernet-Nachricht 15 auf Basis der Ergebnisse des Schritts S16 bestimmt. Die Uhr 8 kann beispielsweise aufgrund von Quarzdrift und/oder Temperatureinfluss Ungenauigkeiten aufweisen.

In einem Schritt S17 wird das Ergebnis vom Schritt S16 validiert.

Die empfangenen Ethernet-Nachrichten 4, 15 werden zusammen mit der jeweiligen lokalen Zeit 9 abgespeichert. Dabei ist anzumerken, dass in diesem Anwendungsfall nicht die synchronisierte Zeit genommen wird, sondern die lokale Zeit 9, um Fehler zu vermeiden. Dies kann auch mit nochmals weiteren Ethernet-Nachrichten wiederholt werden. Auf Basis der Uhr 8 wird die Differenz zwischen den empfangenen lokalen Zeiten 9 bestimmt und gegenübergestellt. Die relative Ungenauigkeit zwischen den Zeiten sollte nicht höher sein als die lokal bestimmte Differenz plus eine etwaige Abweichung im Rahmen von Hardware Spezifika, welche beispielsweise in PPM (parts per million) angegeben werden können.

Wenn beispielsweise das Intervall der Synchronisationsnachrichten, insbesondere der Ethernet-Nachricht 4 und der weiteren Ethernet-Nachricht 15, 100 ms beträgt, dann sollten im (arithmetischen) Mittel auch 10 Nachrichten pro Sekunde empfangen werden. Zwischen zwei Nachrichten soll die Mitte zwischen 100 ms liegen, wobei der Empfang der Ethernet-Nachrichten 4, 15 schwanken kann. Die Schwankung kann berechnet bzw. angegeben werden.

Optional können auch weitere Parameter zur Prüfung der Uhrzeit bzw. der Uhr 8 bzw. der lokalen Zeit 9 herangezogen werden.

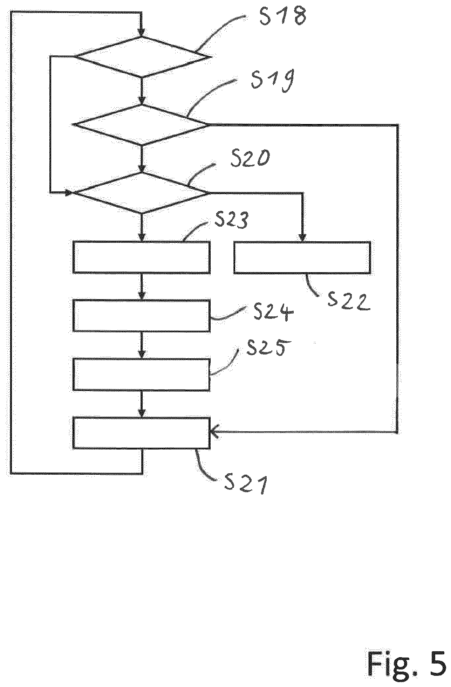

Fig. 5 zeigt die Zeiterfassung bei Validierungsproblemen und den Wechsel zu diesen Verfahren. Da Sensordaten nicht noch einmal angefragt werden können, zum Beispiel von einem Radarsensor oder einer Kamera, da diese üblicherweise Momentaufnahmen liefern, schlägt das Verfahren vor den Zeitstempel 5 mit der lokalen Zeit 9 zu nutzen, um die Sensordaten dennoch nutzen zu können. Damit die Zeitstempel 5, 14 genutzt werden können, schlägt das Verfahren vor bei allen Sensorströmen die Zeitstempel 5, 14 mit der globalen Zeit 6 zu verwerfen und beim Empfang neue Zeitstempel bzw. die lokale Zeit 9 der Uhr 8 für die Zeitstempel 5, 14 zu benutzen, damit die Sensordaten fusioniert werden können. Sollte die Ungenauigkeit der Zeitstempel kleiner als die Hälfte der Sendefrequenz der Sensordaten sein, so kann eine wahrscheinlich exakte Zuordnung noch erfolgen. Die Steuereinheit 2 kann dabei beispielsweise als Fusionseinheit vorliegen, welche mehrere Sensordatenströme, beispielsweise eines Umfelderfassungssystems des Kraftfahrzeugs 1 empfängt.

In einem Schritt S18 wird entschieden, ob bei allen Eingangsports bzw. externen physischen Schnittstellen der Steuereinheit 2 Vertrauen in die Zeitsynchronisation vorliegt. Ist dies der Fall, folgt ein Schritt S19. Ist dies nicht der Fall, folgt ein Schritt S20. Im Schritt S19 wird entschieden, ob Vertrauen in die Zeitsynchronisation bei dieser Ethernet-Nachricht 4 vorliegt. Ist dies der Fall folgt ein Schritt S21, ist dies nicht der Fall, folgt der Schritt S20. In Schritt S20 wird entschieden, ob Vertrauen in die zur Ethernet-Nachricht 4 gehörigen Sensordaten vorliegt. Ist dies nicht der Fall, folgt ein Schritt S22, in welchem die Ethernet-Nachricht 4 verworfen wird oder aber das fehlende Vertrauen zumindest in einer Log-Datei festgehalten wird.

Liegt das Vertrauen in die zugehörigen Sensordaten im Schritt S20 vor, weil die Sensordaten beispielsweise dringend benötigt werden, so folgt ein Schritt S23 in welchem der Zeitstempel 5 mit der globalen Zeit 6 verworfen wird. Es folgt ein Schritt S24 in welchem der Zeitstempel 5 mit der lokalen Zeit 9 erstellt wird. Ferner folgt ein Schritt S25. Im Schritt S25 wird der Zeitstempel 14 der weiteren Ethernet-Nachricht 15 mit der lokalen Zeit 9 erstellt, insbesondere werden Zeitstempel mit der lokalen Zeit 9 für alle weiteren Ethernet-Nachrichten auf den Eingangsports der Steuereinheit 2 erstellt.

Es folgt der Schritt S21, in welchem die Ethernet-Nachricht 4 und beispielsweise auch die weitere Ethernet-Nachricht 15 zur Anwendung weitergeleitet werden.

### Bezugszeichenliste

- 1: Kraftfahrzeug
- 2: Steuereinheit
- 3: Sendesteuereinheit
- 4: Ethernet-Nachricht
- 5: Zeitstempel
- 6: globale Zeit
- 7: Ethernet
- 8: Uhr
- 9: lokale Zeit
- 10: weitere Steuereinheit
- 11: Temperatursensor
- 12: Temperaturwert
- 13: Empfangsfrequenz
- 14: Zeitstempel
- 15: weitere Ethernet-Nachricht

## Patentansprüche

1. Verfahren zur Bearbeitung einer Ethernet-Nachricht (4) mitfehlerhaftem Zeitstempel (5), bei welchem folgende Schritte durchgeführt werden:
- Empfangen einer Ethernet-Nachricht (4) mit einem Zeitstempel (5) durch eine Steuereinheit (2);
- Bestimmen einer Zeitdifferenz zwischen einer globalen Zeit (6) des Zeitstempels (5) und einer lokalen Zeit (6) einer Uhr (8) der Steuereinheit (2);
und
- Erkennen des Zeitstempels (5) der Ethernet-Nachricht (4) als fehlerhaft, wobei die globale Zeit (6) des Zeitstempels (5) durch die lokale Zeit (6) der Uhr (8) der Steuereinheit (2) ersetzt wird, falls der Zeitstempel (5) als fehlerhaft erkannt wird,
**dadurch gekennzeichnet, dass**
die globale Zeit (6) eines Zeitstempels (14) zumindest einer der Ethernet-Nachricht (4) nachfolgenden weiteren Ethernet-Nachricht (15) durch die lokale Zeit (9) der Uhr (8) der Steuereinheit (2) ersetzt wird, falls der Zeitstempel (5) der Ethernet-Nachricht (4) fehlerhaft ist.

2. Verfahren nach Anspruch 1,
**dadurch gekennzeichnet, dass**
bei mehreren oder allen nachfolgenden weiteren Ethernet-Nachrichten (15), die für eine gleiche Anwendung verwendet werden, jeweils die globale Zeit (6) eines Zeitstempels (14) durch die lokale Zeit (9) der Uhr (8) der Steuereinheit (2) ersetzt wird.

3. Verfahren nach Anspruch 1 oder 2,
**dadurch gekennzeichnet, dass**
bei mehreren oder allen nachfolgenden weiteren Ethernet-Nachrichten, die globale Zeit (6) eines Zeitstempels (14) durch die lokale Zeit (9) der Uhr (8) der Steuereinheit (2) ersetzt wird,
- entweder bis die Ursache einer fehlerhaften Zeitangabe gefunden wird,
- oder für eine bestimmte Zeitdauer,
- oder bis zu dem Zeitpunkt an dem kein Fehler mehr erkannt wird.

4. Verfahren nach einem der vorhergehenden Ansprüche,
**dadurch gekennzeichnet, dass**
der Zeitstempel der Ethernet-Nachricht (4) als fehlerhaft erkannt wird, falls die Zeitdifferenz größer als ein Zeitdifferenzgrenzwert ist.

5. Verfahren nach einem der vorhergehenden Ansprüche,
**dadurch gekennzeichnet, dass**
die Ethernet-Nachricht (4) mit dem Zeitstempel (5) mit der lokalen Zeit (9) in der Steuereinheit (2) weiterverarbeitet wird und/oder an eine weitere Steuereinheit (10) weitergeleitet wird.

6. Verfahren nach einem der vorhergehenden Ansprüche,
**dadurch gekennzeichnet, dass**
ein Temperaturwert (12) einer die Ethernet-Nachricht (4) sendende Sendesteuereinheit (3) bestimmt wird und von einem Fehler der Sendesteuereinheit beim Erzeugen des Zeitstempels ausgegangen werden kann, oder ein erhöhtes Risiko eines Fehlers vorhergesehen werden kann, falls der Temperaturwert (12) größer als ein Temperaturgrenzwert ist.

7. Verfahren nach einem der vorhergehenden Ansprüche,
**dadurch gekennzeichnet, dass**
mehrere Ethernet-Nachrichten (4, 15) empfangen werden und eine Empfangsfrequenz (13) der Ethernet-Nachrichten (4, 15) bestimmt wird, wobei die Zeitdifferenz nur bestimmt wird, falls die Empfangsfrequenz (13) um weniger als um einen Frequenztoleranzwert von einem Empfangsfrequenz-sollwert abweicht.

8. Verfahren nach einem der vorhergehenden Ansprüche,
**dadurch gekennzeichnet, dass**
überprüft wird, ob eine die Ethernet-Nachricht (4) sendende Sendesteuereinheit (3) zum Senden der Ethernet-Nachricht (4) an die Steuereinheit (2) autorisiert ist, und die Zeitdifferenz nur bestimmt wird, falls die Sendesteuereinheit (3) autorisiert ist.

9. Verfahren nach Anspruch 6 oder 7,
**dadurch gekennzeichnet, dass**
eine Nachrichtenart der Ethernet-Nachricht (4) bestimmt wird, und die Empfangsfrequenz (13) nur bestimmt wird und/oder die Ethernet-Nachricht (4) nur überprüft wird, falls die Ethernet-Nachricht (4) als Synchronisationsnachricht ausgebildet ist.

10. Steuereinheit (2) für ein Kraftfahrzeug (1), welche dazu eingerichtet ist, eine
Ethernet-Nachricht (4) mit einem Zeitstempel (5) zu empfangen, eine Zeitdifferenz zwischen einer globalen Zeit (6) des Zeitstempels (5) und einer lokalen Zeit (9) einer Uhr (8) der Steuereinheit (2) zu bestimmen, und den Zeitstempel (5) der Ethernet-Nachricht (4) durch die lokale Zeit (6) der Uhr (8) der Steuereinheit (2) zu ersetzen, falls der Zeitstempel (5) fehlerhaft ist, **dadurch gekennzeichnet, dass**
die globale Zeit (6) eines Zeitstempels (14) zumindest einer der Ethernet-Nachricht (4) nachfolgenden weiteren Ethernet-Nachricht (15) durch die lokale Zeit (9) der Uhr (8) der Steuereinheit (2) ersetzt wird, falls der Zeitstempel (5) der Ethernet-Nachricht (4) fehlerhaft ist.

11. Steuereinheit (2) nach Anspruch 10
, welche dazu eingerichtet ist, den
Zeitstempel (5) der Ethernet-Nachricht (4) als fehlerhaft zu erkennen, falls die Zeitdifferenz größer als ein Zeitdifferenzgrenzwert ist.

12. Steuereinheit (2) nach Anspruch 10 oder 11,
welche dazu eingerichtet ist, ein
Verfahren nach einem der Ansprüche 1 bis 9 auszuführen.

## Claims

1. Method for processing an Ethernet message (4) comprising an incorrect timestamp (5), in which the following steps are performed:
- a control unit (2) receiving an Ethernet message (4) comprising a timestamp (5);
- determining a time difference between a global time (6) of the timestamp (5) and a local time (6) of a clock (8) of the control unit (2); and
- identifying the timestamp (5) of the Ethernet message (4) as incorrect,
wherein the global time (6) of the timestamp (5) is replaced by the local time (6) of the clock (8) of the control unit (2) if the timestamp (5) is identified as incorrect,
**characterized in that**
the global time (6) of a timestamp (14) of at least one further Ethernet message (15) subsequent to the Ethernet message (4) is replaced by the local time (9) of the clock (8) of the control unit (2) if the timestamp (5) of the Ethernet message (4) is incorrect.

2. Method according to Claim 1,
**characterized in that**
for a plurality of, or all, subsequent further Ethernet messages (15) which are used for the same application, the global time (6) of a timestamp (14) is in each case replaced by the local time (9) of the clock (8) of the control unit (2).

3. Method according to Claim 1 or 2,
**characterized in that**
for a plurality of, or all, subsequent further Ethernet messages, the global time (6) of a timestamp (14) is replaced by the local time (9) of the clock (8) of the control unit (2)
- either until the cause of an incorrect time indication is found,
- or for a certain period of time,
- or until the time at which an error is no longer identified.

4. Method according to one of the preceding claims, **characterized in that**
the timestamp of the Ethernet message (4) is identified as incorrect if the time difference is greater than a time-difference limit value.

5. Method according to one of the preceding claims, **characterized in that**
the Ethernet message (4) comprising the timestamp (5) containing the local time (9) is processed further in the control unit (2) and/or forwarded to a further control unit (10).

6. Method according to one of the preceding claims, **characterized in that**
a temperature value (12) of a sending control unit (3) sending the Ethernet message (4) is determined, and, if the temperature value (12) is greater than a temperature limit value, an error in the sending control unit during generation of the timestamp can be assumed, or increased risk of an error can be predicted.

7. Method according to one of the preceding claims, **characterized in that**
a plurality of Ethernet messages (4, 15) are received, and a reception frequency (13) of the Ethernet messages (4, 15) is determined, wherein the time difference is determined only if the reception frequency (13) differs from a reception frequency setpoint value by less than a frequency tolerance value.

8. Method according to one of the preceding claims, **characterized in that**
it is checked whether a sending control unit (3) sending the Ethernet message (4) is authorized to send the Ethernet message (4) to the control unit (2), and the time difference is determined only if the sending control unit (3) is authorized.

9. Method according to Claim 6 or 7,
**characterized in that**
a message type of the Ethernet message (4) is determined, and the reception frequency (13) is determined and/or the Ethernet message (4) is checked only if the Ethernet message (4) is in the form of a synchronization message.

10. Control unit (2) for a motor vehicle (1), which control unit is configured to receive an Ethernet message (4) comprising a timestamp (5), to determine a time difference between a global time (6) of the timestamp (5) and a local time (9) of a clock (8) of the control unit (2), and to replace the timestamp (5) of the Ethernet message (4) with the local time (6) of the clock (8) of the control unit (2) if the timestamp (5) is incorrect, **characterized in that**
the global time (6) of a timestamp (14) of at least one further Ethernet message (15) subsequent to the Ethernet message (4) is replaced by the local time (9) of the clock (8) of the control unit (2) if the timestamp (5) of the Ethernet message (4) is incorrect.

11. Control unit (2) according to Claim 10, which is configured to identify the timestamp (5) of the Ethernet message (4) as incorrect if the time difference is greater than a time-difference limit value.

12. Control unit (2) according to Claim 10 or 11, which is configured to execute a method according to one of Claims 1 to 9.

## Revendications

1. Procédé de traitement d'un message Ethernet (4) pourvu d'un horodatage erroné (5), ledit procédé comprenant les étapes suivantes :
- recevoir un message Ethernet (4) pourvu d'un horodatage (5) par le biais d'une unité de commande (2) ;
- déterminer une différence de temps entre un temps global (6) de l'horodatage (5) et un temps local (6) d'une horloge (8) de l'unité de commande (2) ; et
- détecter l'horodatage (5) du message Ethernet (4) comme étant erroné, le temps global (6) de l'horodatage (5) étant remplacé par le temps local (6) de l'horloge (8) de l'unité de commande (2) si l'horodatage (5) est détecté comme étant erroné,
**caractérisé en ce que**
le temps global (6) d'un horodatage (14) d'au moins un autre message Ethernet (15) suivant le message Ethernet (4) est remplacé par le temps local (9) de l'horloge (8) de l'unité de commande (2) si l'horodatage (5) du message Ethernet (4) est erroné.

2. Procédé selon la revendication 1,
**caractérisé en ce que**
dans le cas de plusieurs autres messages Ethernet suivants ou de tous les autres messages Ethernet suivants (15) qui sont utilisés pour une même application, le temps global (6) d'un horodatage (14) est remplacé par le temps local (9) de l'horloge (8) de l'unité de commande (2).

3. Procédé selon la revendication 1 ou 2,
**caractérisé en ce que**
dans le cas de plusieurs autres messages Ethernet suivants ou de tous les autres messages Ethernet suivants, le temps global (6) d'un horodatage (14) est remplacé par le temps local (9) de l'horloge (8) de l'unité de commande (2),
- soit jusqu'à ce que la cause d'une indication de temps erroné soit trouvée,
- soit pendant une durée déterminée,
- soit jusqu'au moment où plus aucune erreur n'est détectée.

4. Procédé selon l'une des revendications précédentes,
**caractérisé en ce que**
l'horodatage du message Ethernet (4) est détecté comme erroné si la différence de temps est supérieure à une valeur limite de différence de temps.

5. Procédé selon l'une des revendications précédentes,
**caractérisé en ce que**
le message Ethernet (4) pourvu de l'horodatage (5) est en outre traité avec le temps local (9) dans l'unité de commande (2) et/ou est transmis à une autre unité de commande (10).

6. Procédé selon l'une des revendications précédentes,
**caractérisé en ce que**
une valeur de température (12) d'une unité de commande d'émission (3) qui envoie le message Ethernet (4) est déterminée et peut être générée à partir d'une erreur de l'unité de commande d'émission lors de la génération de l'horodatage, ou un risque accru d'erreur peut être prévu si la valeur de température (12) est supérieure à une valeur limite de température.

7. Procédé selon l'une des revendications précédentes,
**caractérisé en ce que**
plusieurs messages Ethernet (4, 15) sont reçus et une fréquence de réception (13) des messages Ethernet (4, 15) est déterminée, la différence de temps n'étant déterminée que si la fréquence de réception (13) s'écarte d'une valeur de fréquence de réception de consigne de moins d'une valeur de tolérance de fréquence.

8. Procédé selon l'une des revendications précédentes,
**caractérisé en ce que**
il est vérifié si une unité de commande d'émission (3) qui envoie le message Ethernet (4) est autorisée à envoyer le message Ethernet (4) à l'unité de commande (2), et la différence de temps n'est déterminée que si l'unité de commande d'émission (3) est autorisée.

9. Procédé selon la revendication 6 ou 7,
**caractérisé en ce que**
un type de message du message Ethernet (4) est déterminé et la fréquence de réception (13) n'est déterminée et/ou le message Ethernet (4) n'est vérifié que si le message Ethernet (4) est conçu comme un message de synchronisation.

10. Unité de commande (2) destinée à un véhicule automobile (1) et conçue pour recevoir un message Ethernet (4) pourvu d'un horodatage (5), déterminer une différence de temps entre un temps global (6) de l'horodatage (5) et un temps local (9) d'une horloge (8) de l'unité de commande (2), et remplacer l'horodatage (5) du message Ethernet (4) par le temps local (6) de l'horloge (8) de l'unité de commande (2) si l'horodatage (5) est erroné,
**caractérisé en ce que**
le temps global (6) d'un horodatage (14) d'au moins un autre message Ethernet (15) suivant le message Ethernet (4) est remplacé par le temps local (9) de l'horloge (8) de l'unité de commande (2) si l'horodatage (5) du message Ethernet (4) est erroné.

11. Unité de commande (2) selon la revendication 10, laquelle est conçue pour détecter l'horodatage (5) du message Ethernet (4) comme étant erroné si la différence de temps est supérieure à une valeur limite de différence de temps.

12. Unité de commande (2) selon la revendication 10 ou 11, laquelle est conçue pour mettre en œuvre un procédé selon l'une des revendications 1 à 9.
